# EUROPEAN PATENT SPECIFICATION

(11) **EP 4 147 402 B1**
(45) Date of publication and mention of the grant of the patent: **02.07.2025**
(21) Application number: 21709256.8
(22) Date of filing: 05.02.2021
(51) Int. Cl.: H04L 5/00, H04L 5/14, H04W 72/04

(54) **VRB-TO-PRB ALLOCATION FOR DISJOINT BWP SEGMENTS**
VRB-ZU-PRB-ZUWEISUNG FÜR DISJUNKTE BWP-SEGMENTE
ATTRIBUTION DE VRB-PRB POUR SEGMENTS DE BWP DISJOINTS

(30) Priority: 05.05.2020 GR 20200100225
(43) Date of publication of application: 15.03.2023
(73) Proprietor: QUALCOMM INCORPORATED, San Diego, California 92121-1714 (US)
(72) Inventor: ABOTABL, Ahmed Attia, San Diego, California 92121-1714 (US); ABDELGHAFFAR, Muhammad Sayed Khairy, San Diego, California 92121-1714 (US); SARKIS, Gabi, San Diego, California 92121-1714 (US); MANOLAKOS, Alexandros, San Diego, California 92121-1714 (US); HOSSEINI, Seyedkianoush, San Diego, California 92121-1714 (US); HUANG, Yi, San Diego, California 92121-1714 (US); CHEN, Wanshi, San Diego, California 92121-1714 (US); MUKKAVILLI, Krishna Kiran, San Diego, California 92121-1714 (US)
(74) Representative: Bardehle Pagenberg Partnerschaft mbB Patentanwälte Rechtsanwälte
(86) International application number: PCT/US2021/016834
(87) International publication number: WO 2021/225656

(56) References cited:
- US-A1- 2011 249 640
- US-A1- 2019 150 118
- VIVO: "Remaining issue on DL/UL resource allocation", vol. RAN WG1, no. Vancouver, Canada; 20180122 - 20180126, 13 January 2018 (2018-01-13), XP051384699, Retrieved from the Internet <URL:http://www.3gpp.org/ftp/tsg%5Fran/WG1%5FRL1/TSGR1%5FAH/NR%5FAH%5F1801/Docs/> [retrieved on 20180113]
- LG ELECTRONICS: "Discussion on resource allocation and TBS determination", 1 December 2017 (2017-12-01), pages 1 - 16, XP051369642, Retrieved from the Internet <URL:http://www.3gpp.org/ftp/tsg%5Fran/WG1%5FRL1/TSGR1%5F91/Docs/>

## Description

### BACKGROUND OF THE DISCLOSURE

### 1. Field of the Disclosure

Aspects of the present disclosure generally relate to wireless communication and to techniques and apparatuses for virtual resource block (VRB) to physical resource block (PRB) allocation for disjoint bandwidth part (BWP) segments.

### 2. Description of the Related Art

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless communication network may include a number of base stations (BSs) that can support communication for a number of user equipment (UEs). A user equipment (UE) may communicate with a base station (BS) via the downlink and uplink. The downlink (or forward link) refers to the communication link from the BS to the UE, and the uplink (or reverse link) refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, and/or the like.

The above multiple access technologies have been adopted in various telecommunication standards to provide a common protocol that enables different user equipment to communicate on a municipal, national, regional, and even global level. New Radio (NR), which may also be referred to as 5G, is a set of enhancements to the LTE mobile standard promulgated by the Third Generation Partnership Project (3GPP). NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation.

US 2011/249640 A1 provides a system and method for transmitting control information. A method for communications controller operations includes combining control data for each relay node of at least one relay node into a control channel data stream, mapping a plurality of transmission resources for the control channel data stream into a plurality of physical resource blocks using a distributed virtual resource mapping rule, and transmitting the plurality of physical resource blocks to the set of at least one relay node. The plurality of transmission resources are mapped to physical resource blocks that are non-contiguous in a frequency domain.

US 2019/150118 A1 relates to methods and apparatus mapping virtual resource blocks (VRBs) to physical resource blocks (PRBs) and using the mapping in wireless communications, for example, in new radio (NR) technologies. An exemplary method includes determining a first interleaved mapping that maps a first interleaving unit of N consecutive first virtual resource blocks (VRBs) to N consecutive first physical resource blocks (PRBs), wherein each first PRB comprises a set of frequency resources during a period, transmitting a first grant allocating the first interleaving unit of first VRBs to a first user equipment (UE), and communicating with the first UE via the first PRBs mapped to the first VRBs of the first interleaving unit.

3GPP TSG RAN WG1 AH 1801, R1-1800210, Vancouver, Canada, January 22nd - 26th, 2018, title "Remaining issue on DL/UL resource allocation", provides several proposals regarding DVRB issues.

3GPP TSG RAN WG1 Meeting 91, R1-1719929, Reno, USA, November 27th - December 1st, 2017, discusses frequency-domain resource allocation, time-domain resource allocation, and TBS determination.

However, as the demand for mobile broadband access continues to increase, there exists a need for further improvements in LTE and NR technologies. Preferably, these improvements should be applicable to other multiple access technologies and the telecommunication standards that employ these technologies.

### SUMMARY

The scope of protection of the present invention is defined by the independent claims.

Optional variants are defined in the dependent claims.

The following presents a simplified summary of one or more aspects in order to provide a basic understanding of such aspects.

A problem associated with frequency division duplex (FDD) or full duplex communication is self-interference, particularly with respect to sub-band full duplex (SBFD) communications. Resource allocations for SBFD communications may be implemented via a frequency domain resource allocation (FDRA), which may be identified in a downlink control information (DCI) field. The FDRA may identify frequency resource explicitly via a bitmap (Type o) or via reference to a range of RBs (Type 1).

For Type o allocation, in some aspects, each bit of the bit map may correspond to an RB group (RGB) of a plurality of RBGs in the BWP. However, if there is a relatively large gap between the first and second disjoint BWP DL segments (e.g., sub-BWP segments), the bitmap indication may become unpractical due to inefficiency.

For Type 1 allocation, consecutive (or contiguous) RBs are identified in association with a resource indicator value (RIV) via designation of a startpoint (RBₛₜₐᵣₜ) and a size (or length) indicator. Because Type 1 allocation identifies a BWP segment via start and length indicators in terms of RIV, it is difficult to use Type 1 allocation to reference disjoint BWP segments for SBFD. In particular, attempting to use Type 1 allocation to span across both disjoint BWP segments (e.g., DL BWP segments) will cause the indicated BWP to include the intervening BWP segment (e.g., UL BWP segment). Alternatively, each disjoint BWP segment can be identified via its own RIV and its own separate start and length indicators, which may increase overhead and complexity.

Further, at the gNB scheduler, a first virtual RB (VRB) group may be associated with a first disjoint BWP segment, while a virtual VRB group may be associated with a second disjoint BWP segment. VRB groups are typically mapped to physical RBs (PRBs) in accordance with a VRB-to-PRB mapping rule for one particular set of contiguous PRBs, and not multiple disjointed sets of PRBs (or BWP segments) which occur with respect to SBFD slots as noted above.

Aspects of the present disclosure are directed to an allocation of VRB groups to PRB across disjoint BWP segments based upon one or more VRB-to-PRB mapping rules for an SBFD slot. The aspects describe below provide various technical advantages, such as leveraging SBFD so as to provide Rx-WOLA to reduce ACLR leakage to the UL signal, analog LPF to improve ADC dynamic range, Rx-AGC states to improve the NF, and so on.

In an aspect of the disclosure, a method, a computer-readable medium, a computer program and an apparatus are provided. The apparatus may be a wireless node, such as a UE or a BS. The wireless node may perform the method as defined in claim 1.

Aspects generally include a method, apparatus, system, computer program product, non-transitory computer-readable medium, user equipment, cIoT user equipment, base station, wireless communication device, and/or processing system as substantially described with reference to and as illustrated by the drawings, and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a block diagram conceptually illustrating an example of a wireless communication network, in accordance with various aspects of the present disclosure.
Fig. 2 is a block diagram conceptually illustrating an example of a base station in communication with a UE in a wireless communication network, in accordance with various aspects of the present disclosure.
Figs. 3-5 are diagrams illustrating one or more examples of full-duplex operation modes, in accordance with various aspects of the present disclosure.
Fig. 6 is a diagram illustrating one or more examples of full-duplex types, in accordance with various aspects of the present disclosure.
Fig. 7A-7B illustrates a top-perspective and a side-perspective of a panel architecture for a full duplex gNB in accordance with an aspect of the disclosure.
Fig. 8 illustrates an example resource allocation for a FDD BS and one or more UEs in accordance with an aspect of the disclosure.
FIG. 9 illustrates an exemplary process of wireless communications according to an aspect of the disclosure.
FIG. 10A-14 illustrate VRB-to-PRB mapping schemes in accordance aspects of the disclosure.
FIG. 15 is a conceptual data flow diagram illustrating the data flow between different means/components in exemplary apparatuses in accordance with an aspect of the disclosure.
FIG. 16 is a diagram illustrating an example of a hardware implementation for an apparatus employing a processing system according to an aspect of the disclosure..
FIG. 17 is a diagram illustrating an example of a hardware implementation for an apparatus employing a processing system according to another aspect of the disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with 3G and/or 4G wireless technologies, aspects of the present disclosure can be applied in other generation-based communication systems, such as 5G and later, including NR technologies.

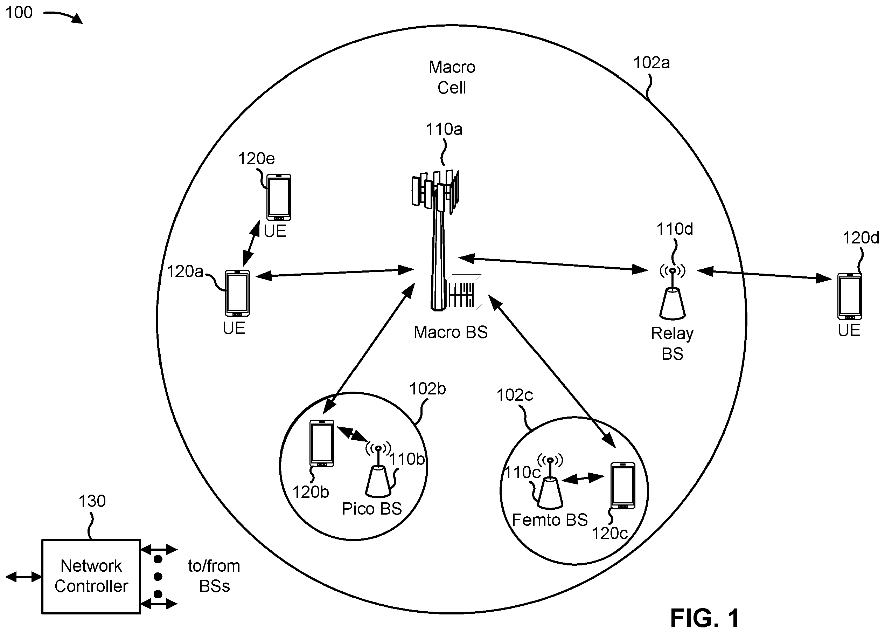

Fig. 1 is a diagram illustrating a wireless network 100 in which aspects of the present disclosure may be practiced. The wireless network 100 may be an LTE network or some other wireless network, such as a 5G or NR network. The wireless network 100 may include a number of BSs 110 (shown as BS 110a, BS 110b, BS 110c, and BS 110d) and other network entities. A BS is an entity that communicates with user equipment (UEs) and may also be referred to as a base station, a NR BS, a Node B, a gNB, a 5G node B (NB), an access point, a transmit receive point (TRP), and/or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces such as a direct physical connection, a virtual network, and/or the like using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay station 110d may communicate with macro BS 110a and a UE 120d in order to facilitate communication between BS 110a and UE 120d. A relay station may also be referred to as a relay BS, a relay base station, a relay, and/or the like.

Wireless network 100 may be a heterogeneous network that includes BSs of different types, e.g., macro BSs, pico BSs, femto BSs, relay BSs, and/or the like. These different types of BSs may have different transmit power levels, different coverage areas, and different impacts on interference in wireless network 100. For example, macro BSs may have a high transmit power level (e.g., 5 to 40 Watts) whereas pico BSs, femto BSs, and relay BSs may have lower transmit power levels (e.g., 0.1 to 2 Watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, and/or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, location tags, and/or the like, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components, memory components, and/or the like. In some aspects, the processor components and the memory components may be coupled together. For example, the processor components (e.g., one or more processors) and the memory components (e.g., a memory) may be operatively coupled, communicatively coupled, electronically coupled, electrically coupled, and/or the like.

In general, any number of wireless networks may be deployed in a given geographic area. Each wireless network may support a particular radio access technology (RAT) and may operate on one or more frequencies. A RAT may also be referred to as a radio technology, an air interface, and/or the like. A frequency may also be referred to as a carrier, a frequency channel, and/or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, and/or the like), a mesh network, and/or the like. In this case, the UE 120 may perform scheduling operations, resource selection operations, and/or other operations described elsewhere herein as being performed by the base station 110.

As indicated above, Fig. 1 is provided as an example. Other examples may differ from what is described with regard to Fig. 1.

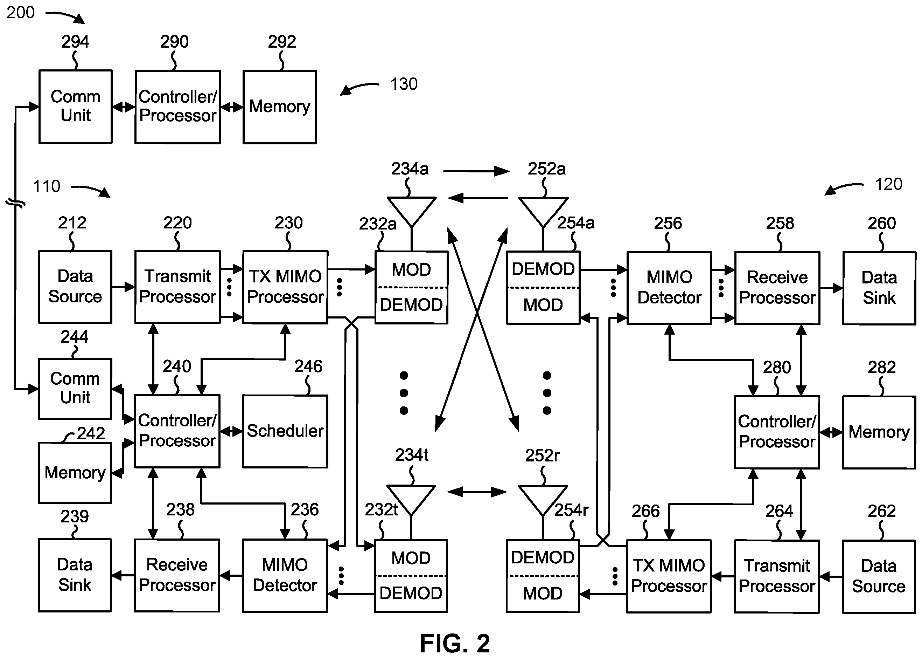

Fig. 2 shows a block diagram of a design 200 of base station 110 and UE 120, which may be one of the base stations and one of the UEs in Fig. 1. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI) and/or the like) and control information (e.g., CQI requests, grants, upper layer signaling, and/or the like) and provide overhead symbols and control symbols. Transmit processor 220 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM and/or the like) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively. According to various aspects described in more detail below, the synchronization signals can be generated with location encoding to convey additional information.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM and/or the like) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. A channel processor may determine reference signal received power (RSRP), received signal strength indicator (RSSI), reference signal received quality (RSRQ), channel quality indicator (CQI), and/or the like. In some aspects, one or more components of UE 120 may be included in a housing.

On the uplink, at UE 120, a transmit processor 264 may receive and process data from a data source 262 and control information (e.g., for reports comprising RSRP, RSSI, RSRQ, CQI, and/or the like) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM, CP-OFDM, and/or the like), and transmitted to base station 110. At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Network controller 130 may include communication unit 294, controller/processor 290, and memory 292.

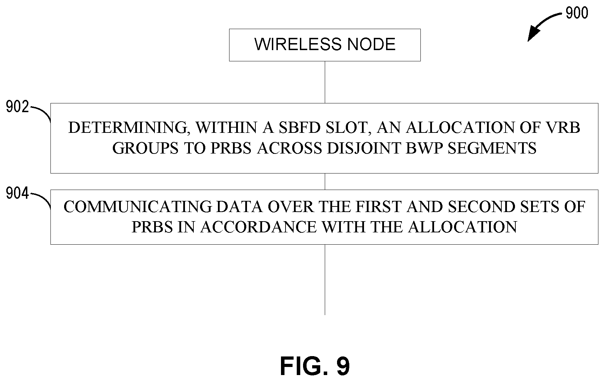

Controller/processor 240 of base station 110, controller/processor 280 of UE 120, and/or any other component(s) of Fig. 2 may perform one or more techniques associated with disjoint resource indication for full-duplex operation, as described in more detail elsewhere herein. For example, controller/processor 240 of base station 110, controller/processor 280 of UE 120, and/or any other component(s) of Fig. 2 may perform or direct operations of, for example, process 900 of Fig. 9 and/or other processes as described herein. Memories 242 and 282 may store data and program codes for base station 110 and UE 120, respectively. In some aspects, memory 242 and/or memory 282 may comprise a non-transitory computer-readable medium storing one or more instructions for wireless communication. For example, the one or more instructions, when executed (e.g., directly, or after compiling, converting, interpreting, and/or the like) by one or more processors of the base station 110 and/or the UE 120, may perform or direct operations of, for example, process 900 of Fig. 9 and/or other processes as described herein. In some aspects, executing instructions may include running the instructions, converting the instructions, compiling the instructions, interpreting the instructions, and/or the like. A scheduler 246 may schedule UEs for data transmission on the downlink and/or uplink.

As indicated above, Fig. 2 is provided as an example. Other examples may differ from what is described with regard to Fig. 2.

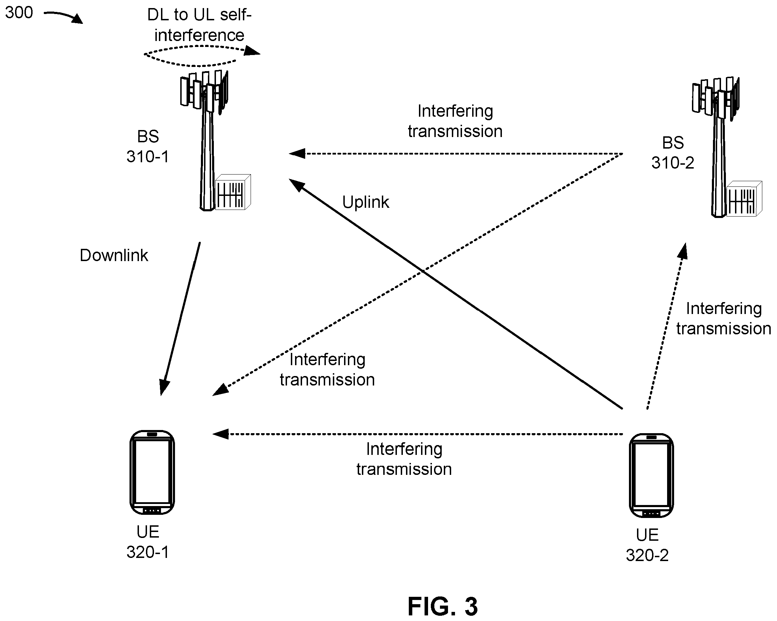

Figs. 3-5 are diagrams illustrating one or more examples of full-duplex operation modes, in accordance with various aspects of the present disclosure. A user equipment (UE) and a base station (BS) may communicate with each other using beams. For example, a beam may be a downlink beam (e.g., on which information may be conveyed from the BS to the UE) or an uplink beam (e.g, on which information may be conveyed from the UE to the BS). In some aspects, the UE and the BS may be integrated access backhaul (IAB) wireless nodes.

A communication link between a UE and a BS may be referred to as half-duplex when the communication link includes only one of an uplink or a downlink or full-duplex when the communication link includes an uplink and a downlink. A full-duplex communication link may provide increased scalability of data rates on the link in comparison to a half-duplex communication link. In a full-duplex communication link, different antenna elements, sub-arrays, or antenna panels of a wireless communication device may simultaneously or contemporaneously perform uplink and downlink communication.

Full-duplex communication may present certain challenges in comparison to half-duplex communication. For example, a wireless communication device (e.g., a UE, a BA, and/or a wireless node) may experience self-interference between an uplink beam and a downlink beam of a full-duplex link or between components of the wireless communication device. This self-interference may complicate the monitoring of reference signals to detect beam failure. Furthermore, self-interference, cross-correlation, and/or the like, may occur in a full-duplex communication link that may not occur in a half-duplex communication link. Additionally, a wireless communication device may experience interfering transmissions from other wireless communication devices (e.g., based at least in part on an angular spread of a beam transmitted by the other wireless communication devices) in the wireless network that may cause a beam failure (e.g., an uplink beam failure, a downlink beam failure, and/or the like)

As shown in Fig. 3, an example wireless network 300 includes a BS 310-1 operating in a full-duplex operation mode. The BS 310-1 may receive an uplink from a UE 320-2 and transmit a downlink to a UE 320-1. The UE-320-1 and the UE 320-2 may be operating in a half-duplex operation mode. The BS 310-1 may experience downlink to uplink self-interference based at least in part on the downlink transmitted to UE 320-1 and the uplink received from UE 320-2. Additionally, BS 310-1 may experience interfering transmissions from other wireless communication devices transmitting in the wireless network 300 (e.g., from a BS 310-2). Moreover, UE 320-1 interfering transmissions from other wireless communication devices transmitting in the wireless network 300 (e.g., from the UE 320-2, from the BS 310-2, and/or the like).

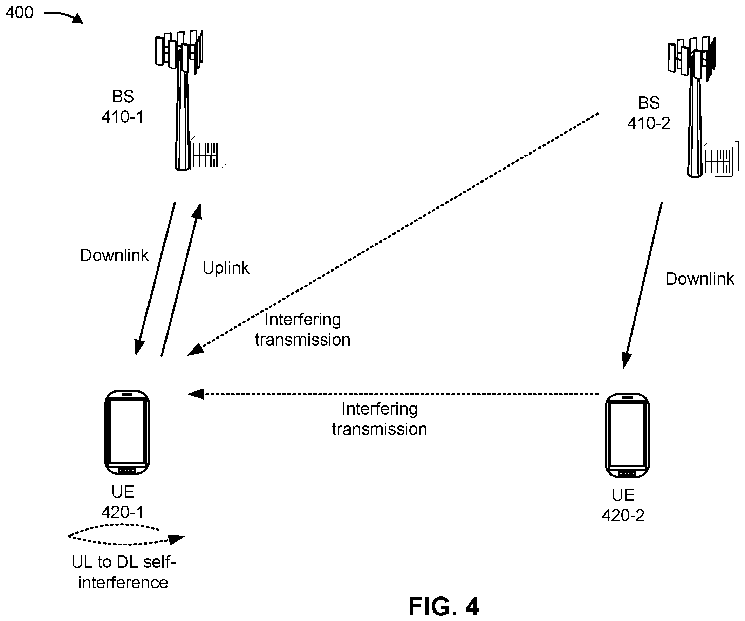

As shown in Fig. 4, an example wireless network 400 includes a UE 420-1 operating in a full-duplex operation mode. The UE 420-1 may transmit an uplink to a BS 410-1 and may receive a downlink from the BS 410-1. In some aspects, the BS 410-1 may be operating in a full-duplex operation mode. The UE 420-1 may experience uplink to downlink self-interreference based at least in part on the uplink transmitted to the BS 410-1 and the downlink received from the BS 410-1. The wireless network 400 may include other wireless communication devices, such as a BS 410-2 and a UE 420-2. The BS 410-2 may transmit a downlink to the UE-410-2. The UE 420-1 may experience an interfering transmission based at least in part on the transmission of the BS 410-2 and/or the UE 420-1. For example, the downlink transmitted by the BS 410-2 may have an angular spread that may cause an interfering transmission to be received by the UE 420-1. Similarly, an uplink transmitted by the UE 420-2 may have an angular spread that may cause an interfering transmission to be received by the UE 420-1.

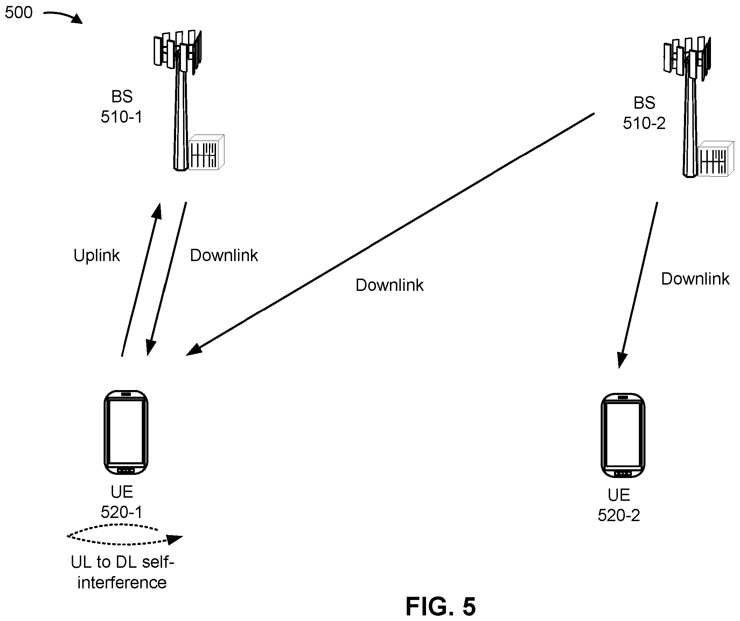

As shown in Fig. 5, an example wireless network 500 includes a UE 520-1 operating in a full-duplex operation mode. The UE 520-1 may transmit an uplink to a BS 510-1 and may receive a downlink from a BS 510-2. The UE 520-1 may include a multi transmission and reception (multi-TRP) architecture. The UE 520-1 may experience uplink to downlink self-interreference based at least in part on the uplink transmitted to the BS 510-1 and the downlink received from the BS 510-2. The BS 510-1 and the BS 510-2 may be operating in a half-duplex mode of operation. The BS 510-2 may transmit a downlink to a UE 520-2. In some aspects, the UE 520-1 may experience one or more interfering transmissions based at least in part on the transmissions of BS 510-1, BS 510-2, and/or UE 520-2.

As indicated above, Figs. 3-5 are provided as examples. Other examples may differ from what is described with respect to Figs. 3-5.

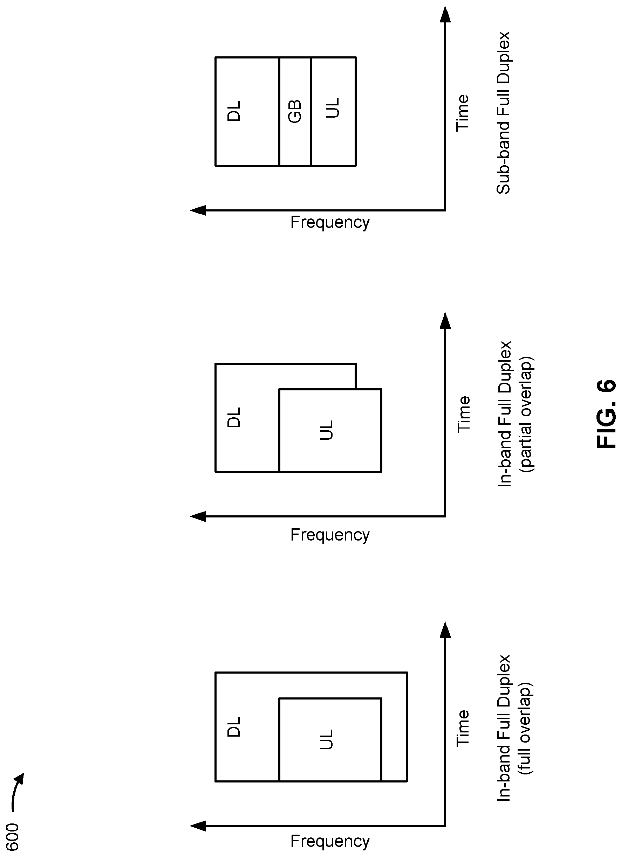

Fig. 6 is a diagram illustrating one or more examples 600 of full-duplex types, in accordance with various aspects of the present disclosure. As described above, full-duplex operation may involve communications having both an uplink (UL) and a downlink (DL) at the same time (e.g., transmit and receive at the same time). The uplink and downlink may share resources (e.g., time resources and/or frequency resources) associated with the communications.

As shown in Fig. 6, a full-duplex communication may be an in-band full duplex (IBFD) mode (e.g., a mode that includes an uplink and a downlink that share the same time resources and/or frequency resources). In some aspects, an IBFD mode may be a full overlap IBFD mode, such that the downlink resources may completely overlap the uplink resources (e.g., all of the uplink resources are shared with the downlink resources). In some aspects, a full overlap IBFD mode may have uplink resources that completely overlap the downlink resources. In some aspects, an IBFD communication may be a partial overlap IBFD mode, such that the downlink resources do not completely overlap the uplink resources (e.g., only some of the uplink resources are shared with the downlink resources).

In some aspects, a full-duplex mode may be a sub-band frequency division duplex (FDD) mode (e.g., a mode that includes an uplink and a downlink that share the same time resources, and use different frequency resources). In some aspects, the resources associated with the downlink and the resources associated with the uplink may be separated in the frequency domain by a guard band (GB) (e.g., a range of frequencies that are not allocated to the uplink or the downlink).

As indicated above, Fig. 6 is provided as an example. Other examples may differ from what is described with respect to Fig. 6.

A wireless communication standard or governing body may specify how a wireless spectrum is to be used. For example, 3GPP may specify how wireless spectrum is to be used for the 5G/NR radio access technology and interface. As an example, a specification may indicate whether a band is to be used as paired spectrum or unpaired spectrum. A band in a paired spectrum may use a first frequency region for uplink communication and a second frequency region for downlink communication, where the first frequency region does not overlap the second frequency region. For example, a paired band may have an uplink operating band and a downlink operating band that are configured to use non-overlapped frequency regions. Some deployments may use frequency division duplexing (FDD) in the paired bands. Examples of paired bands in NR include NR operating bands n1, n2, n3, n5, n7, n8, n12, n20, n25, and n28, as specified by 3GPP Technical Specification (TS) 38.101-1.

An unpaired band may allow downlink and uplink operations within a same frequency region (e.g., a same operating band). For example, an unpaired band may configure an uplink operating band and a downlink operating band in the same frequency range. Some deployments may use time division duplexing (TDD) in the unpaired band, where some time intervals (e.g., slots, sub-slots, and/or the like) are used for uplink communications and other time intervals are used for downlink communications. In this case, substantially the entire bandwidth of a component carrier may be used for a downlink communication or an uplink communication, depending on whether the communication is performed in a downlink slot, an uplink slot, or a special slot (in which downlink or uplink communications can be scheduled). Examples of unpaired bands include NR operating bands n40, n41, and n50, as specified by 3GPP TS 38.101-1.

In some cases, it may be inefficient to use TDD in an unpaired spectrum. For example, uplink transmit power may be limited, meaning that UEs may not be capable of transmitting with enough power to efficiently utilize the full bandwidth of an uplink slot. This may be particularly problematic in large cells at the cell edge. Furthermore, the usage of TDD may introduce latency relative to a scheme in which uplink communications and downlink communications can be performed in the same time interval, since a given time interval may be used for only uplink communication or for only downlink communication using TDD. However, frequency domain resource assignment (FDRA) for a bandwidth part (BWP) in the case of FDD in an unpaired spectrum may be problematic due to a gap between a first frequency region of the FDRA and a second frequency region of the FDRA (e.g., due to the BWP being disjointed).

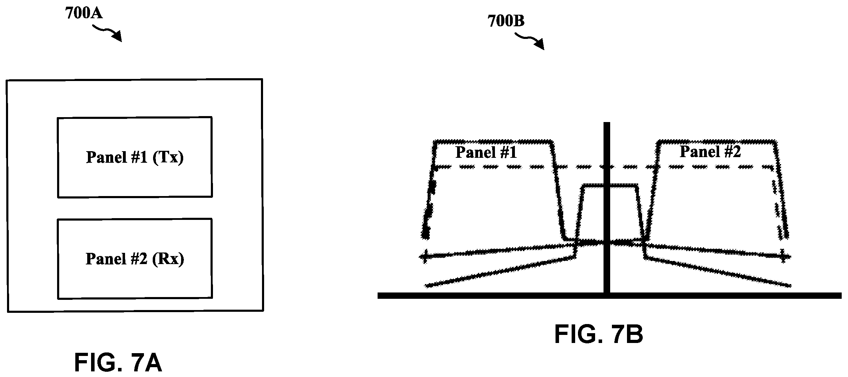

Fig. 7A-7B illustrates a top-perspective 700A and a side-perspective 700B of a panel architecture for a full duplex gNB in accordance with an aspect of the disclosure. The panel architecture depicted in Figs. 7A-7B which comprises Panels #1 and #2 that may support simultaneous Tx and Rx operations, and may help to improve isolation to reduce self-interference (e.g., >50dB). In an example, Panel #1 may be used for DL transmission at both edges of a respective BWP, while Panel #2 is used for UL reception at a middle of the respective BWP.

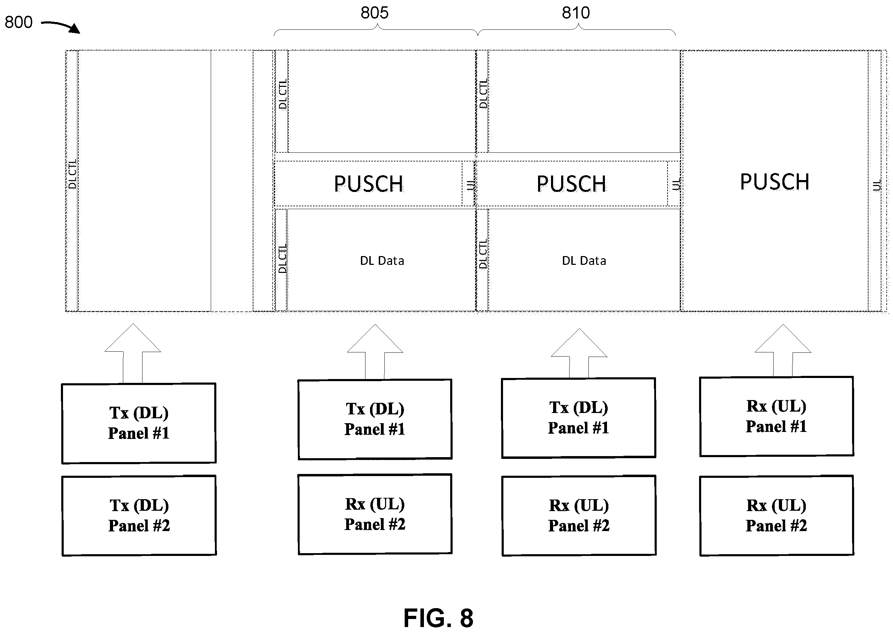

Fig. 8 illustrates an example resource allocation 800 for a FDD BS and one or more UEs in accordance with an aspect of the disclosure. In particular, slots 805 and 810 are configured as SBFD slots, with a first disjoint BWP DL segment and a second disjoint BWP DL segment. In some designs, the first and second BWP DL segments may be associated with DL transmissions to different UEs. The first and second disjoint BWP DL segments are separated by a BWP UL segment (e.g., PUSCH) and guard bands (GBs). In some designs, the BWP UL segment may be associated with UL transmissions from one or more of the different UEs. In some systems such as 5G, the first and second disjoint BWP DL segments may correspond to sub-BWP segments.

In Fig. 8, the resource allocation 800 is based on the underlying panel architecture depicted in Figs. 7A-7B. For the SBFD slots 805-810, in some designs, greater than 40 dB isolation may be arranged between the UL and DL BWP segments. In some designs, Weighted Overlap Add (WOLA) processing at Receiver (Rx-WOLA) may be implemented to reduce adjacent channel leakage power ratio (ACLR) to the UL BWP segment. In some designs, analog low pass filtering (LPF) may be used to improve analog to digital conversion (ADC) dynamic range. In some designs, Rx automatic gain control (AGC) states may be configured to improve the noise figure (NF). In some designs, a digital integrated circuit (IC) of the ACLR leakage may exceed 20 dB, and a non-linear model may be configured per each Tx-Rx pair.

In some designs, the allocation of frequency resources in slots 805 and 810 may be indicated via a frequency domain resource allocation (FDRA) from the base station. For example, the FDRA may be identified in a downlink control information (DCI) field. The DCI may be formatted according to a technical standard, such as 3GPP TS 38.212 V15 (e.g., format 0_1 for scheduling a physical uplink shared channel (PUSCH), formation 1_0 for scheduling a physical downlink shared channel (PDSCH), and/or the like).

The FDRA may identify frequency resource explicitly via a bitmap (Type 0) or via reference to a range of RBs (Type 1). For Type 0 allocation, in some aspects, each bit of the bit map may correspond to an RB group (RGB) of a plurality of RBGs in the BWP. Each bit of the bit map may identify if an RBG associated with the bit is allocated in the FDRA. For example, if the bit is assigned a value of '0', the bit may identify that the RBG associated with the bit is not allocated. If the bit is assigned a value of '1', the bit may identify that the RBG associated with the bit is allocated. In some designs, the size of the bitmap may be either 9 bits or 18 bits. However, if there is a relatively large gap between the first and second disjoint BWP DL segments, the bitmap indication may become unpractical due to inefficiency.

For Type 1 allocation, consecutive (or contiguous) RBs are identified in association with a resource indicator value (RIV) via designation of a startpoint (RBₛₜₐᵣₜ) and a size (or length) indicator, as follows:

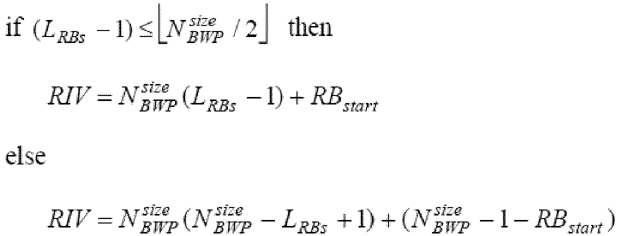

Because Type 1 allocation identifies a BWP segment via start and length indicators in terms of RIV, it is difficult to use Type 1 allocation to reference disjoint BWP segments for SBFD. In particular, attempting to use Type 1 allocation to span across both disjoint BWP segments (e.g., DL BWP segments) will cause the indicated BWP to include the intervening BWP segment (e.g., UL BWP segment). Alternatively, each disjoint BWP segment can be identified via its own RIV and its own separate start and length indicators, which may increase overhead and complexity.

Further, at the gNB scheduler, a first virtual RB (VRB) group may be associated with a first disjoint BWP segment, while a virtual VRB group may be associated with a second disjoint BWP segment. VRB groups are typically mapped to physical RBs (PRBs) in accordance with a VRB-to-PRB mapping rule for one particular set of contiguous PRBs, and not multiple disjointed sets of PRBs (or BWP segments) which occur with respect to SBFD slots as noted above.

Aspects of the present disclosure are directed to an allocation of VRB groups to PRB across disjoint BWP segments based upon one or more VRB-to-PRB mapping rules for an SBFD slot. The aspects describe below provide various technical advantages, such as leveraging SBFD so as to provide Rx-WOLA to reduce ACLR leakage to the UL signal, analog LPF to improve ADC dynamic range, Rx-AGC states to improve the NF, and so on.

FIG. 9 illustrates an exemplary process 900 of wireless communications according to an aspect of the disclosure. The process 900 of FIG. 9 is performed by a wireless node, which may correspond to either a UE such as UE 120 or a BS such as BS 110.

At 902, the wireless node (e.g., controller/processor 280, controller/processor 240, scheduler 246, etc.) determines within a SBFD slot, an allocation of first and second VRB groups to PRBs across first and second BWP segments based upon one or more VRB-to-PRB mapping rules. As will be discussed in more detail below, the VRB-to-PRB mapping rule(s) may comprise a manner in which the VRB groups are interleaved (or not interleaved) across the first and second BWP segments, and possibly a separate intervening BWP segment. In an example, if the wireless node corresponds to a UE, then the determination at 902 may occur at the controller/processor 280 where the FDRA is processed. In another example, if the wireless node corresponds to a UE, then the determination at 902 may occur at the controller/processor 240 and/or the scheduler 246 where the VRB-to-PRB mapping is implemented. In some systems such as 5G, the first and second disjoint BWP DL segments may correspond to sub-BWP segments.

At 904, the wireless node (e.g., antennas 252a...252r, modulator/demodulator 254a...254r, MIMO detector 256, receive processor 258, Tx MIMO processor 266, transmit processor 264, antennas 234a...234r, modulator/demodulator 232a...232r, MIMO detector 236, receive processor 238, Tx MIMO processor 230, transmit processor 220, etc.) communicates data over the first and second sets of PRBs in accordance with the allocation. In an example, if the wireless node corresponds to a UE, then the communicating at 904 may comprise transmitting uplink data, receiving downlink data, or a combination thereof. In another example, if the wireless node corresponds to a BS, then the communicating at 904 may comprise transmitting downlink data, receiving uplink data, or a combination thereof.

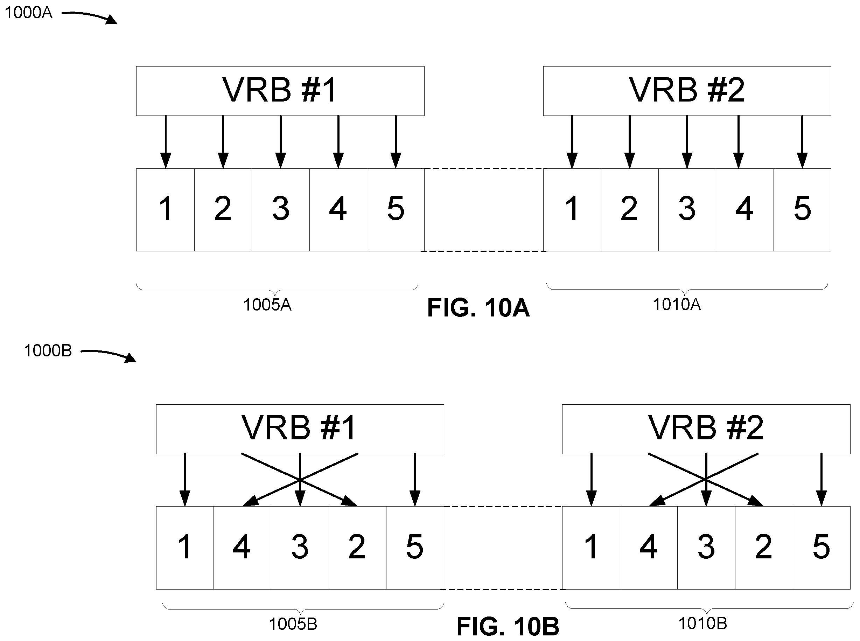

Referring to FIG. 9, in an example, the one or more VRB-to-PRB mapping rules may comprise mapping the first VRB to a first disjoint BWP segment without interleaving, or mapping the second VRB to a second disjoint BWP segment without interleaving, or a combination thereof. FIG. 10A illustrates a VRB-to-PRB mapping scheme 1000A in accordance with this approach, whereby a first VRB group (i.e., VRB #1) and a second VRB group (i.e., VRB #2) map directly to respective PRBs in a first disjoint BWP segment 1005A and a second disjoint BWP segment 1010A, respectively, without interleaving.

Referring to FIG. 9, in another example, the one or more VRB-to-PRB mapping rules may comprise mapping the first VRB to a first disjoint BWP segment with interleaving, and mapping the second VRB to a second disjoint BWP segment with interleaving that is independent relative to the interleaving associated with the first disjoint BWP segment. FIG. 10B illustrates a VRB-to-PRB mapping scheme 1000B in accordance with this approach, whereby a first VRB group (i.e., VRB #1) and a second VRB group (i.e., VRB #2) map directly to PRBs in a first disjoint BWP segment 1005B and a second disjoint BWP segment 1010B, respectively, with independent interleaving. In other words, the individual RBs of VRB #1 are interleaved with respect to each other, but not with respect to the individual RBs of VRB #2.

Referring to FIG. 9, in another example, the one or more VRB-to-PRB mapping rules may comprise mapping a respective VRB to a respective disjoint BWP segment with interleaving if the respective disjoint BWP segment is above a size threshold and without interleaving if the respective disjoint BWP segment is not above the size threshold. In an example, this particular VRB-to-PRB mapping rule may function to override one or more other VRB-to-PRB mapping rules that would otherwise dictate that interleaving be used.

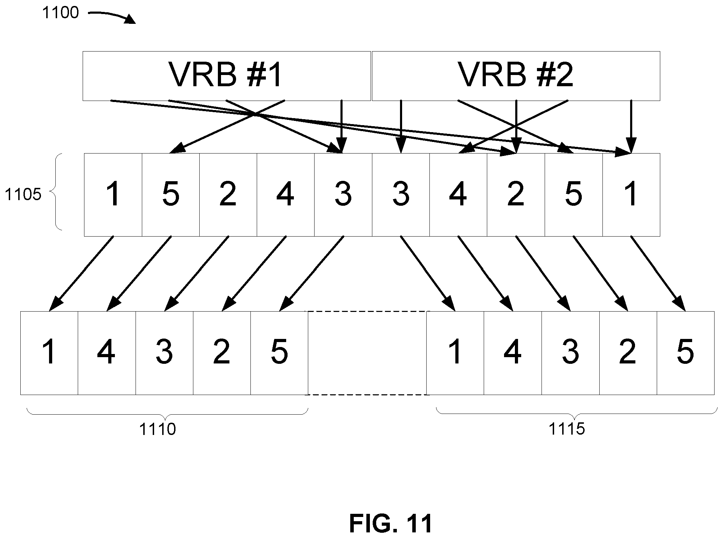

Referring to FIG. 9, in another example, the one or more VRB-to-PRB mapping rules may comprise merging the first and second VRB groups, and then mapping the merged VRB group to the first and second disjoint BWP parts with interleaving. FIG. 11 illustrates a VRB-to-PRB mapping scheme 1100 in accordance with this approach, whereby a first VRB group (i.e., VRB #1) and a second VRB group (i.e., VRB #2) are merged into a combined VRB 1105 while being interleaved together, after which the combined and interleaved VRB 1105 is mapped to a first disjoint BWP segment 1110 and a second disjoint BWP segment 1110, respectively.

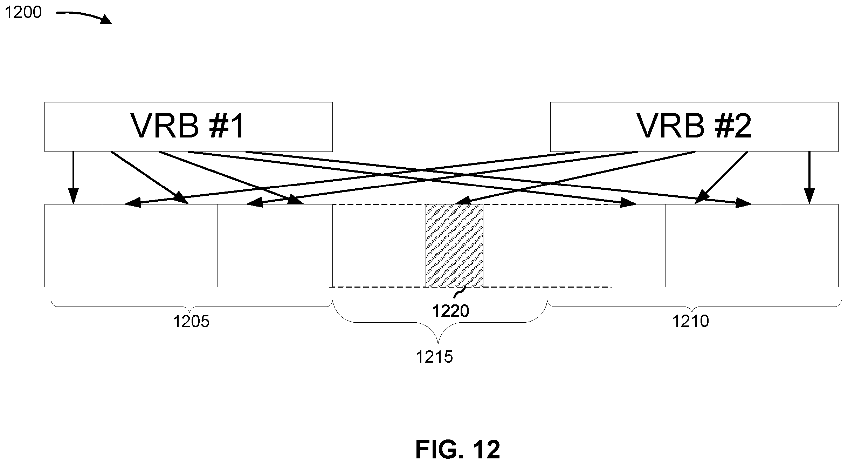

Referring to FIG. 9, in another example, the one or more VRB-to-PRB mapping rules may comprise jointly interleaving the first and second VRBs across the first and second disjoint BWP segments. FIG. 12 illustrates a VRB-to-PRB mapping scheme 1200 in accordance with this approach, whereby a first VRB group (i.e., VRB #1) and a second VRB group (i.e., VRB #2) are jointly interleaved across a first disjoint BWP segment 1205 and a second disjoint BWP segment 1210, respectively. In the aspect of FIG. 12, the allocation of the first and second VRBs is across PRBs that overlap with an intervening BWP segment 1215 between the first and second disjoint BWP segments. In particular, one particular PRB 1220 to which VRB #2 is mapped overlaps with the intervening BWP segment 1215. In an example, the first and second disjoint BWP segments comprise DL data, and the intervening BWP segment comprises a GB, UL data, or a combination thereof. So, VRB #2's allocation of PRB 1220 may overlap with the GB and/or with one or UL data transmission. In other designs (e.g., where Type 0 or bitmap-based VRB-to-PRB mapping rule is used), the overlap can be avoided.

There are various ways in which the wireless node (which may correspond to UE or BS) may handle such an overlap, including but not limited to:
- omitting DL data from the intervening BWP segment, or
- performing rate-matching (at the UE associated with the overlapping VRB) on its respective allocated PRBs of the intervening BWP segment (e.g., instead of actively decoding the traffic data such as PDSCH).
- associating each VRB is associated with a priority, and DL data is assumed by a respective UE to be present only with respect to an overlapping VRB associated with a highest priority, or
- interpreting an overlap as an error condition at the UE, or
- interpreting an overlap as a cycling repetition at the UE, or
- any combination thereof.

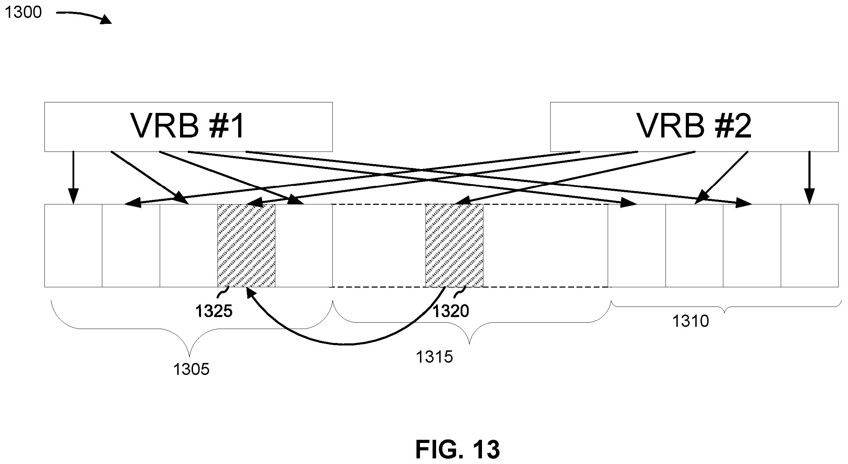

FIG. 13 illustrates a VRB-to-PRB mapping scheme 1300 in accordance with an approach whereby the UE interprets an overlap as a cycling repetition at the UE. In FIG. 13, a first VRB group (i.e., VRB #1) and a second VRB group (i.e., VRB #2) are jointly interleaved across a first disjoint BWP segment 1305 and a second disjoint BWP segment 1310, respectively. In the aspect of FIG. 13, the allocation of the first and second VRBs is across PRBs that overlap with an intervening BWP segment 1315 between the first and second disjoint BWP segments. In particular, one particular PRB 1320 to which VRB #2 is mapped overlaps with the intervening BWP segment 1315. In this case, the UE interprets PRB 1320 as a cycling repetition of another PRB that is not inside of the intervening BWP segment 1315, in this case, PRB 1325 which is part of the first disjoint BWP segment 1305.

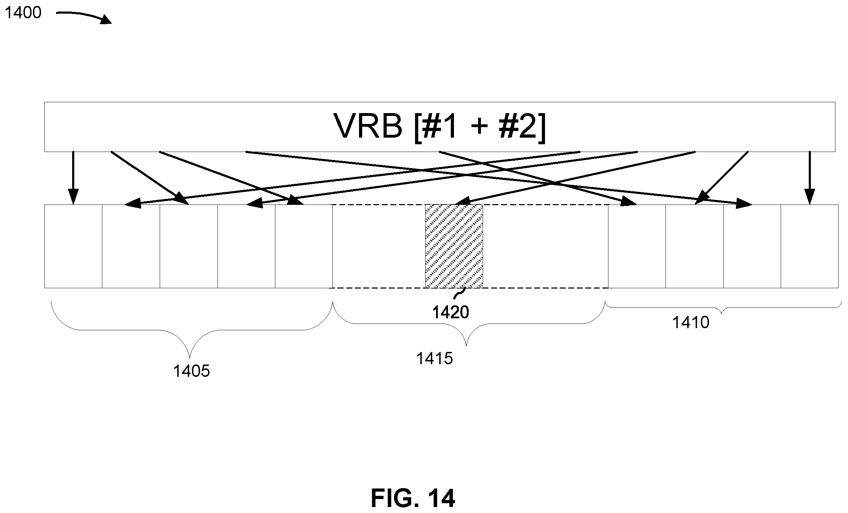

Referring to FIG. 9, in another example, the one or more VRB-to-PRB mapping rules may comprise scheduling the DL data in the first and second disjoint BWP segments via a single resource indicator value (RIV) with a startpoint and length indicator that encompasses the intervening BWP segment. In other words, a Type 1 allocation may be used whereby VRB #1 and VRB #2 are treated as a single PDSCH transmission that spans the first and second VRBs across the first and second disjoint BWP segments as well as an intervening BWP segment. FIG. 14 illustrates a VRB-to-PRB mapping scheme 1400 in accordance with this approach, whereby a consolidated VRB associated with a single RIV is interleaved across a first disjoint BWP segment 1405 and a second disjoint BWP segment 1410, respectively. In the aspect of FIG. 14, the allocation of the VRB is across PRBs that overlap with an intervening BWP segment 1415 between the first and second disjoint BWP segments. In particular, one particular PRB 1420 to which VRB #2 is mapped overlaps with the intervening BWP segment 1415. In an example, the first and second disjoint BWP segments comprise DL data, and the intervening BWP segment comprises a GB, UL data, or a combination thereof. So, VRB #2's allocation of PRB 1420 may overlap with the GB and/or with one or UL data transmission. In a further example, the overlap reflected in FIG. 14 with respect to PRB 1420 may be handled via any of the mechanisms described above with respect to the overlap of PRB 1220 in FIG. 12 (e.g., UE performing rate-matching only whereby PDSCH PRBs in the overlapping part are unavailable for PDSCH transmission, DL data omitted from this PRB, interpreted as error condition or cycling repetition, etc.). In other designs (e.g., where Type 0 or bitmap-based VRB-to-PRB mapping rule is used), the overlap can be avoided.

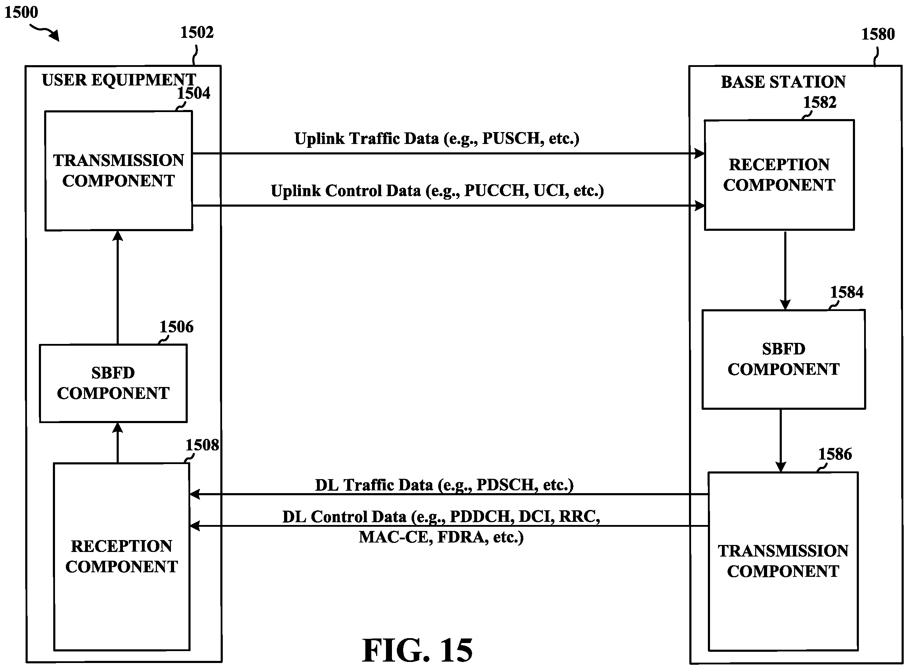

FIG. 15 is a conceptual data flow diagram 1500 illustrating the data flow between different means/components in exemplary apparatuses 1502 and 1580 in accordance with an aspect of the disclosure. The apparatus 1502 may be a UE (e.g., UE 120) in communication with an apparatus 1580, which may be a base station (e.g., base station 110).

The apparatus 1502 includes a transmission component 1504, which may correspond to transmitter circuitry in UE 120 as depicted in FIG. 2, including controller/processor 280, antenna(s) 252a ... 252r, modulators(s) 254a ... 254r, TX MIMO processor 266, TX processor 264. The apparatus 1502 further includes SBFD component 1506, which may correspond to processor circuitry in UE 120 as depicted in FIG. 2, including controller/processor 280, etc. The apparatus 1502 further includes a reception component 1508, which may correspond to receiver circuitry in UE 120 as depicted in FIG. 2, including controller/processor 280, antenna(s) 252a ... 252r, demodulators(s) 254a ... 254r, MIMO detector 256, RX processor 258.

The apparatus 1580 includes a reception component 1582, which may correspond to receiver circuitry in BS 110 as depicted in FIG. 2, including controller/processor 240, antenna(s) 234a ... 234r, demodulators(s) 232a ... 232r, MIMO detector 236, RX processor 238, communication unit 244. The apparatus 1580 further includes a SBFD component 1584, which may correspond to processor circuitry in BS 110 as depicted in FIG. 2, including controller/processor 240. The apparatus 1580 further includes a transmission component 1586, which may correspond to transmission circuitry in BS 110 as depicted in FIG. 2, including e.g., controller/processor 240, antenna(s) 234a ... 234r, modulators(s) 232a ... 232r, Tx MIMO processor 230, TX processor 220, communication unit 244.

Referring to FIG. 15, the transmission component 1504 transmits uplink traffic data (e.g., PUSCH, etc.) and uplink control data (e.g., PUCCH, UCI, etc.) to the to the reception component 1582. In some designs, the SBFD component 1584 determines VRB-to-PRB allocations for an SBFD slot, which may be based in part on the uplink communications from the apparatus 1502. The SBFD 1584 forwards the VRB-to-PRB allocations for the SBFD slot to the transmission component 1586, which transmits downlink traffic data (e.g., PDSCH) and downlink control data (e.g., PDCCH, DCI, RRC signaling, MAC-CEs, FDRA, etc.) to the reception component 1508 based on the VRB-to-PRB allocations for the SBFD slot. The SBFD component 1506 determines the VRB-to-PRB allocations for the SBFD slot processes the downlink data and/or schedules uplink data for transmission based on the determination.

One or more components of the apparatus 1502 and apparatus 1580 may perform each of the blocks of the algorithm in the aforementioned flowchart of FIG. 9. As such, each block in the aforementioned flowchart of FIG. 9 may be performed by a component and the apparatus 1502 and apparatus 1580 may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

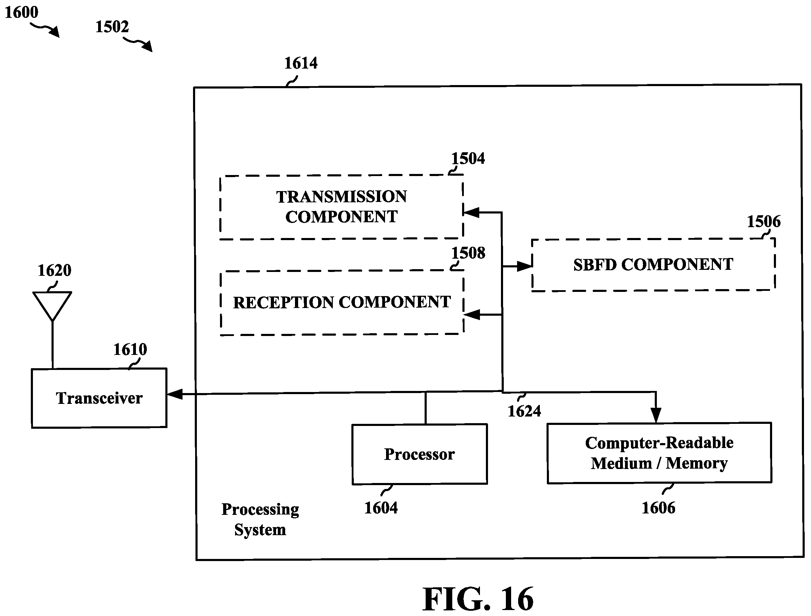

FIG. 16 is a diagram 1600 illustrating an example of a hardware implementation for an apparatus 1502 employing a processing system 1614. The processing system 1614 may be implemented with a bus architecture, represented generally by the bus 1624. The bus 1624 may include any number of interconnecting buses and bridges depending on the specific application of the processing system 1614 and the overall design constraints. The bus 1624 links together various circuits including one or more processors and/or hardware components, represented by the processor 1604, the components 1504, 1506 and 1508, and the computer-readable medium / memory 1606. The bus 1624 may also link various other circuits such as timing sources, peripherals, voltage regulators, and power management circuits, which are well known in the art, and therefore, will not be described any further.

The processing system 1614 may be coupled to a transceiver 1610. The transceiver 1610 is coupled to one or more antennas 1620. The transceiver 1610 provides a means for communicating with various other apparatus over a transmission medium. The transceiver 1610 receives a signal from the one or more antennas 1620, extracts information from the received signal, and provides the extracted information to the processing system 1614, specifically the reception component 1508. In addition, the transceiver 1610 receives information from the processing system 1614, specifically the transmission component 1504, and based on the received information, generates a signal to be applied to the one or more antennas 1620. The processing system 1614 includes a processor 1604 coupled to a computer-readable medium / memory 1606. The processor 1604 is responsible for general processing, including the execution of software stored on the computer-readable medium / memory 1606. The software, when executed by the processor 1604, causes the processing system 1614 to perform the various functions described supra for any particular apparatus. The computer-readable medium / memory 1606 may also be used for storing data that is manipulated by the processor 1604 when executing software. The processing system 1614 further includes at least one of the components 1504, 1506 and 1508. The components may be software components running in the processor 1604, resident/stored in the computer readable medium / memory 1606, one or more hardware components coupled to the processor 1604, or some combination thereof. The processing system 1614 may be a component of the UE 120 of FIG. 2 and may include the memory 282, and/or at least one of the TX processor 264, the RX processor 258, and the controller/processor 280.

In one configuration, the apparatus 1502 (e.g., a UE) for wireless communication includes means for determining, within a sub-band full duplex (SBFD) slot, an allocation of first and second virtual resource block (VRB) groups to physical resource blocks (PRBs) across first and second disjoint bandwidth part (BWP) segments based upon one or more VRB-to-PRB mapping rules, and means for communicating data over the first and second sets of PRBs in accordance with the allocation.

The aforementioned means may be one or more of the aforementioned components of the apparatus 1502 and/or the processing system 1614 of the apparatus 1502 configured to perform the functions recited by the aforementioned means. As described supra, the processing system 1614 may include the TX processor 264, the RX processor 258, and the controller/processor 280.

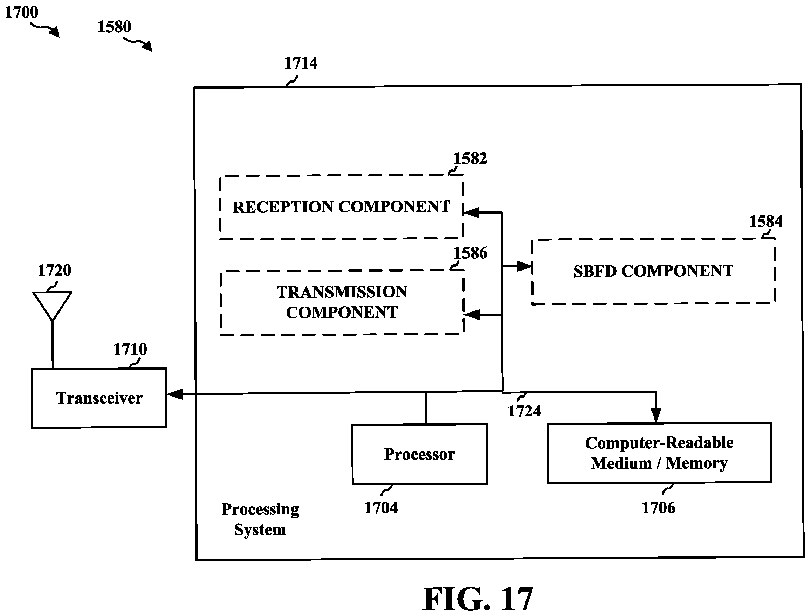

FIG. 17 is a diagram 1700 illustrating an example of a hardware implementation for an apparatus 1580 employing a processing system 1714. The processing system 1714 may be implemented with a bus architecture, represented generally by the bus 1724. The bus 1724 may include any number of interconnecting buses and bridges depending on the specific application of the processing system 1714 and the overall design constraints. The bus 1724 links together various circuits including one or more processors and/or hardware components, represented by the processor 1704, the components 1582, 1584 and 1586, and the computer-readable medium / memory 1706. The bus 1724 may also link various other circuits such as timing sources, peripherals, voltage regulators, and power management circuits, which are well known in the art, and therefore, will not be described any further.

The processing system 1714 may be coupled to a transceiver 1710. The transceiver 1710 is coupled to one or more antennas 1720. The transceiver 1710 provides a means for communicating with various other apparatus over a transmission medium. The transceiver 1710 receives a signal from the one or more antennas 1720, extracts information from the received signal, and provides the extracted information to the processing system 1714, specifically the reception component 1582. In addition, the transceiver 1710 receives information from the processing system 1714, specifically the transmission component 1586, and based on the received information, generates a signal to be applied to the one or more antennas 1720. The processing system 1714 includes a processor 1704 coupled to a computer-readable medium / memory 1706. The processor 1704 is responsible for general processing, including the execution of software stored on the computer-readable medium / memory 1706. The software, when executed by the processor 1704, causes the processing system 1714 to perform the various functions described supra for any particular apparatus. The computer-readable medium / memory 1706 may also be used for storing data that is manipulated by the processor 1704 when executing software. The processing system 1714 further includes at least one of the components 1582, 1584 and 1586. The components may be software components running in the processor 1704, resident/stored in the computer readable medium / memory 1706, one or more hardware components coupled to the processor 1704, or some combination thereof. The processing system 1714 may be a component of the BS 110 of FIG. 2 and may include the memory 242, and/or at least one of the TX processor 220, the RX processor 238, and the controller/processor 240.

In one configuration, the apparatus 1580 (e.g., a BS) for wireless communication includes means for determining, within a sub-band full duplex (SBFD) slot, an allocation of first and second virtual resource block (VRB) groups to physical resource blocks (PRBs) across first and second disjoint bandwidth part (BWP) segments based upon one or more VRB-to-PRB mapping rules, and means for communicating data over the first and second sets of PRBs in accordance with the allocation.

The aforementioned means may be one or more of the aforementioned components of the apparatus 1580 and/or the processing system 1714 of the apparatus 1580 configured to perform the functions recited by the aforementioned means. As described supra, the processing system 1714 may include the TX processor 220, the RX processor 238, and the controller/processor 240.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an insulator and a conductor). Furthermore, it is also intended that aspects of a clause can be included in any other independent clause, even if the clause is not directly dependent on the independent clause.

As used herein, satisfying a threshold may, depending on the context, refer to a value being greater than the threshold, greater than or equal to the threshold, less than the threshold, less than or equal to the threshold, equal to the threshold, not equal to the threshold, and/or the like.

It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

## Claims

1. A method performed by a wireless node (110, 120), comprising:
determining (902), within a sub-band full duplex, SBFD, slot for transmitting and receiving at the same time within said SBFD slot, an allocation of first and second virtual resource block, VRB, groups to physical resource blocks, PRBs, across first and second disjoint bandwidth part, BWP, segments within the SBFD slot based upon one or more VRB-to-PRB mapping rules; and
communicating (904) data over the first and second sets of PRBs in accordance with the allocation.

2. The method of claim 1, wherein the one or more VRB-to-PRB mapping rules comprise mapping the first VRB to a first disjoint BWP segment without interleaving, or mapping the second VRB to a second disjoint BWP segment without interleaving, or a combination thereof.

3. The method of claim 1, wherein the one or more VRB-to-PRB mapping rules comprise mapping the first VRB to a first disjoint BWP segment with interleaving, and mapping the second VRB to a second disjoint BWP segment with interleaving that is independent relative to the interleaving associated with the first disjoint BWP segment.

4. The method of claim 1, wherein the one or more VRB-to-PRB mapping rules comprise mapping a respective VRB to a respective disjoint BWP segment with interleaving if the respective disjoint BWP segment is above a size threshold and without interleaving if the respective disjoint BWP segment is not above the size threshold.

5. The method of claim 1, wherein the one or more VRB-to-PRB mapping rules comprise merging the first and second VRB groups, and then mapping the merged VRB group to the first and second disjoint BWP parts with interleaving.

6. The method of claim 1, wherein the one or more VRB-to-PRB mapping rules comprise jointly interleaving the first and second VRBs across the first and second disjoint BWP segments.

7. The method of claim 6, wherein the allocation of the first and second PRBs is across the first and second disjoint BWP segments only such that an intervening BWP segment is bypassed.

8. The method of claim 6, wherein the allocation of the first and second VRBs is across PRBs that overlap with an intervening BWP segment between the first and second disjoint BWP segments.

9. The method of claim 8,
wherein the first and second disjoint BWP segments comprise downlink, DL, data,
wherein the intervening BWP segment comprises a guard band, GB, uplink, UL, data, or a combination thereof.

10. The method of claim 9,
wherein DL data is omitted from the intervening BWP segment, or
wherein a user equipment, UE, associated with the overlapping VRB performs rate-matching on respective PRBs of the intervening BWP segment, or
wherein each VRB is associated with a priority, and DL data is assumed by the UE to be present only with respect to an overlapping VRB associated with a highest priority, or
wherein the overlap is interpreted as an error condition at the UE, or
wherein the overlap is interpreted as cycling repetition at the UE, or
any combination thereof.

11. The method of claim 9, wherein the DL data in the first and second disjoint BWP segments is scheduled via a single resource indicator value, RIV, with a startpoint and length indicator that encompasses the intervening BWP segment.

12. The method of claim 1,
wherein the wireless node (110, 120) corresponds to a base station (110), or
wherein the wireless node (110, 120) corresponds to a user equipment (120), UE.

13. A wireless node (110, 120), comprising means for performing the method of any of the claims 1 to 12.

14. A non-transitory computer-readable medium containing instructions stored thereon that, when executed on at least one processor in a wireless node (110, 120), cause the at least one processor to perform the method of any of the claims 1 to 12.

15. A computer program comprising instructions that, when executed on at least one processor in a wireless node (110, 120), cause the at least one processor to perform the method of any of the claims 1 to 12.

## Patentansprüche

1. Verfahren, das von einem drahtlosen Knoten (110, 120) durchgeführt wird, umfassend:
Bestimmen (902), innerhalb eines Subband-Vollduplex-, SBFD-, Schlitzes zum gleichzeitigen Senden und Empfangen innerhalb des SBFD-Schlitzes, einer Zuordnung von ersten und zweiten virtuellen Ressourcenblock-, VRB-, Gruppen zu physikalischen Ressourcenblöcken, PRBs, über erste und zweite disjunkte Bandbreitenteil-, BWP-, Segmente innerhalb des SBFD-Schlitzes basierend auf einer oder mehreren VRB-zu-PRB-Abbildungsregeln; und
Kommunizieren (904) von Daten über die ersten und zweiten Sätze von PRBs gemäß der Zuordnung.

2. Verfahren nach Anspruch 1, wobei die eine oder die mehreren VRB-zu-PRB-Abbildungsregeln das Abbilden des ersten VRB auf ein erstes disjunktes BWP-Segment ohne Verschachtelung oder das Abbilden des zweiten VRB auf ein zweites disjunktes BWP-Segment ohne Verschachtelung oder eine Kombination davon umfassen.

3. Verfahren nach Anspruch 1, wobei die eine oder die mehreren VRB-zu-PRB-Abbildungsregeln das Abbilden des ersten VRB auf ein erstes disjunktes BWP-Segment mit Verschachtelung und das Abbilden des zweiten VRB auf ein zweites disjunktes BWP-Segment mit Verschachtelung, das unabhängig von der Verschachtelung ist, die dem ersten disjunkten BWP-Segment zugeordnet ist, umfassen.

4. Verfahren nach Anspruch 1, wobei die eine oder die mehreren VRB-zu-PRB-Abbildungsregeln das Abbilden eines jeweiligen VRB auf ein jeweiliges disjunktes BWP-Segment mit Verschachtelung, wenn das jeweilige disjunkte BWP-Segment über einer Größenschwelle liegt, und ohne Verschachtelung, wenn das jeweilige disjunkte BWP-Segment nicht über der Größenschwelle liegt, umfassen.

5. Verfahren nach Anspruch 1, wobei die eine oder die mehreren VRB-zu-PRB-Abbildungsregeln das Zusammenführen der ersten und zweiten VRB-Gruppen und dann das Abbilden der zusammengeführten VRB-Gruppe auf die ersten und zweiten disjunkten BWP-Teile mit Verschachtelung umfassen.

6. Verfahren nach Anspruch 1, wobei die eine oder die mehreren VRB-zu-PRB-Abbildungsregeln das gemeinsame Verschachteln der ersten und zweiten VRBs über die ersten und zweiten disjunkten BWP-Segmente umfassen.

7. Verfahren nach Anspruch 6, wobei die Zuordnung der ersten und zweiten PRBs über die ersten und zweiten disjunkten BWP-Segmente nur so erfolgt, dass ein intervenierendes BWP-Segment umgangen wird.

8. Verfahren nach Anspruch 6, wobei die Zuordnung der ersten und zweiten VRBs über PRBs erfolgt, die sich mit einem intervenierenden BWP-Segment zwischen den ersten und zweiten disjunkten BWP-Segmenten überlappen.

9. Verfahren nach Anspruch 8,
wobei die ersten und zweiten disjunkten BWP-Segmente Downlink-, DL-, Daten umfassen,
wobei das intervenierende BWP-Segment ein Schutzband-, GB-, Uplink-, UL-, Daten oder eine Kombination davon umfasst.

10. Verfahren nach Anspruch 9,
wobei DL-Daten aus dem intervenierenden BWP-Segment ausgelassen werden, oder
wobei ein Benutzergerät, UE, das dem überlappenden VRB zugeordnet ist, eine Ratenanpassung an jeweiligen PRBs des intervenierenden BWP-Segments durchführt, oder
wobei jeder VRB einer Priorität zugeordnet ist und von dem UE angenommen wird, dass DL-Daten nur in Bezug auf einen überlappenden VRB vorhanden sind, der einer höchsten Priorität zugeordnet ist, oder
wobei die Überlappung als eine Fehlerbedingung an dem UE interpretiert wird, oder
wobei die Überlappung als zyklische Wiederholung an dem UE interpretiert wird, oder
eine beliebige Kombination davon.

11. Verfahren nach Anspruch 9, wobei die DL-Daten in den ersten und zweiten disjunkten BWP-Segmenten über einen einzelnen Ressourcenindikatorwert, RIV, mit einem Startpunkt- und Längenindikator, der das intervenierende BWP-Segment einschließt, geplant werden.

12. Verfahren nach Anspruch 1,
wobei der drahtlose Knoten (110, 120) einer Basisstation (110) entspricht, oder
wobei der drahtlose Knoten (110, 120) einem Benutzergerät (120), UE, entspricht.

13. Drahtloser Knoten (110, 120), umfassend Mittel zum Durchführen des Verfahrens nach einem der Ansprüche 1 bis 12.

14. Nichtflüchtiges computerlesbares Medium, das darauf gespeicherte Anweisungen enthält, die, wenn sie auf mindestens einem Prozessor in einem drahtlosen Knoten (110, 120) ausgeführt werden, den mindestens einen Prozessor veranlassen, das Verfahren nach einem der Ansprüche 1 bis 12 durchzuführen.

15. Computerprogramm, umfassend Anweisungen, die, wenn sie auf mindestens einem Prozessor in einem drahtlosen Knoten (110, 120) ausgeführt werden, den mindestens einen Prozessor veranlassen, das Verfahren nach einem der Ansprüche 1 bis 12 durchzuführen.

## Revendications

1. Un procédé réalisé par un nœud sans fil (110, 120), comprenant :
la détermination (902), à l'intérieur d'un slot de sous-bande de duplex intégral, SBFD, pour la transmission et la réception en même temps, à l'intérieur dudit slot SBFD, d'une attribution de premier et second groupes de blocs de ressources virtuelles, VRB, à des blocs de ressources physiques, PRB, sur des premier et second segments de partie de bande passante, BWP, disjoints à l'intérieur du slot SBFD sur la base d'une ou plusieurs règles de mappage VRB-à-PRB ; et
la communication (904) de données sur les premier et second ensembles de PRB conformément à l'attribution.

2. Le procédé selon la revendication 1, dans lequel les une ou plusieurs règles de mappage VRB-à-PRB comprennent le mappage du premier VRB à un premier segment BWP disjoint sans entrelacement, ou le mappage du second VRB à un second segment BWP disjoint sans entrelacement, ou une combinaison de ceux-ci.

3. Le procédé selon la revendication 1, dans lequel les une ou plusieurs règles de mappage VRB-à-PRB comprennent le mappage du premier VRB à un premier segment BWP disjoint avec entrelacement, et le mappage du second VRB à un second segment BWP disjoint avec entrelacement qui est indépendant par rapport à l'entrelacement associé au premier segment BWP disjoint.

4. Le procédé selon la revendication 1, dans lequel les une ou plusieurs règles de mappage VRB-à-PRB comprennent le mappage d'un VRB respectif à un segment BWP disjoint respectif avec entrelacement si le segment BWP disjoint respectif est au-dessus d'un seuil de taille et sans entrelacement si le segment BWP disjoint respectif n'est pas au-dessus du seuil de taille.

5. Le procédé selon la revendication 1, dans lequel les une ou plusieurs règles de mappage VRB-à-PRB comprennent la fusion des premier et second groupes de VRB, et puis le mappage du groupe de VRB fusionné aux première et seconde parties BWP disjointes avec entrelacement.

6. Le procédé selon la revendication 1, dans lequel les une ou plusieurs règles de mappage VRB-à-PRB comprennent l'entrelacement conjoint des premier et second VRB sur les premier et second segments BWP disjoints.

7. Le procédé selon la revendication 6, dans lequel l'attribution des premier et second PRB est sur les premier et second segments BWP disjoints uniquement de sorte qu'un segment BWP intermédiaire est contourné.

8. Le procédé selon la revendication 6, dans lequel l'attribution des premier et second VRB est sur des PRB qui se chevauchent avec un segment BWP intermédiaire entre les premier et second segments BWP disjoints.

9. Le procédé selon la revendication 8,
dans lequel les premier et second segments BWP disjoints comprennent des données de liaison descendante, DL,
dans lequel le segment BWP intermédiaire comprend une bande de garde, GB, des données de liaison montante, UL, ou une combinaison de celles-ci.

10. Le procédé selon la revendication 9,
dans lequel les données DL sont omises du segment BWP intermédiaire, ou
dans lequel un équipement utilisateur, UE, associé au VRB se chevauchant réalise une adaptation de débit sur les PRB respectifs du segment BWP intermédiaire, ou
dans lequel chaque VRB est associé à une priorité, et des données DL sont supposées par l'UE être présentes uniquement par rapport à un VRB se chevauchant associé à une priorité la plus élevée, ou
dans lequel le chevauchement est interprété comme une condition d'erreur au niveau de l'UE, ou
dans lequel le chevauchement est interprété comme une répétition cyclique au niveau de l'UE, ou toute combinaison de ceux-ci.

11. Le procédé selon la revendication 9, dans lequel les données DL dans les premier et second segments BWP disjoints sont programmées via une unique valeur d'indicateur de ressource, RIV, avec un point de départ et un indicateur de longueur qui englobe le segment BWP intermédiaire.

12. Le procédé selon la revendication 1,
dans lequel le nœud sans fil (110, 120) correspond à une station de base (110), ou
dans lequel le nœud sans fil (110, 120) correspond à un équipement utilisateur (120), UE.

13. Un nœud sans fil (110, 120), comprenant des moyens pour réaliser le procédé selon l'une des revendications 1 à 12.

14. Un support non transitoire lisible par calculateur contenant des instructions stockées sur celui-ci qui, lorsqu'elles sont exécutées sur au moins un processeur dans un nœud sans fil (110, 120), amènent l'au moins un processeur à réaliser le procédé selon l'une des revendications 1 à 12.

15. Un programme de calculateur comprenant des instructions qui, lorsqu'elles sont exécutées sur l'au moins un processeur dans un nœud sans fil (110, 120), amènent l'au moins un processeur à réaliser le procédé selon l'une des revendications 1 à 12.
